# EUROPEAN PATENT APPLICATION

(11) **EP 4 760 881 A1**
(43) Date of publication of application: **17.06.2026**
(21) Application number: 24858229.8
(22) Date of filing: 05.08.2024
(51) Int. Cl.: H01M 10/6563, H01M 10/6567, H01M 10/6554

(54) **THERMAL MANAGEMENT DEVICE AND ENERGY STORAGE SYSTEM**

(30) Priority: 30.08.2023 CN 202311109264
(71) Applicant: Huawei Digital Power Technologies Co., Ltd., Shenzhen, Guangdong 518043 (CN)
(72) Inventor: YU, Tao, Shenzhen, Guangdong 518043 (CN); WU, Shuang, Shenzhen, Guangdong 518043 (CN); YE, Kun, Shenzhen, Guangdong 518043 (CN); LI, Zhaohui, Shenzhen, Guangdong 518043 (CN); LI, Malin, Shenzhen, Guangdong 518043 (CN)
(74) Representative: Isarpatent
(86) International application number: PCT/CN2024/109774
(87) International publication number: WO 2025/044686

(57) **Abstract**

Embodiments of this application disclose a thermal management apparatus and an energy storage system, to improve space utilization of the thermal management apparatus and reduce a volume of the thermal management apparatus. The thermal management apparatus includes a cabinet, a fan, a first heat dissipation module, and a second heat dissipation module. The fan is disposed on a top surface of the cabinet. The first heat dissipation module and the second heat dissipation module each are a plate structure, and an included angle between the first heat dissipation module and the top surface is unequal to an included angle between the second heat dissipation module and the top surface. A distance between an end that is of the first heat dissipation module and that is close to the top surface and an end that is of the second heat dissipation module and that is close to the top surface is greater than a distance between an end that is of the first heat dissipation module and that is away from the top surface and an end that is of the second heat dissipation module and that is away from the top surface.

## Description

This application claims priority to Chinese Patent Application No. 202311109264.6, filed with the China National Intellectual Property Administration on August 30, 2023 and entitled "THERMAL MANAGEMENT APPARATUS AND ENERGY STORAGE SYSTEM", which is incorporated herein by reference in its entirety.

### TECHNICAL FIELD

This application relates to the field of thermal management technologies, and in particular, to a thermal management apparatus and an energy storage system.

### BACKGROUND

With development of new energy technologies, secondary batteries such as lithium-ion batteries are widely used in industries such as energy storage apparatuses, electric vehicles, and electric tools due to features such as high volume capacity density, a light weight, a small volume, and environmental protection. For example, in an energy storage apparatus, a plurality of lithium-ion battery cells are combined to form a battery module, and a plurality of battery modules are combined to form a battery cluster. When an energy storage battery of the energy storage apparatus is charged or discharged, the energy storage battery generates a large amount of heat. In addition, space in the energy storage apparatus is limited. As a result, a temperature in the energy storage battery rises rapidly, and performance and a service life of the lithium-ion battery cell are seriously affected. Therefore, to reduce the temperature of the energy storage battery, a heat dissipation system, for example, an air cooling system or a liquid cooling system, is usually disposed in the energy storage apparatus.

Air cooling is mainly used in scenarios with low cooling density, and features a simple structure and a small quantity of devices. A liquid cooling manner has a strong heat transfer capability, and is usually used in a device that generates a large amount of heat, for example, used for heat dissipation of an energy storage battery. However, the liquid cooling system usually occupies large space due to a large quantity of internal components and a complex structure.

Therefore, how to improve space utilization of the liquid cooling system and implement integration and miniaturization of the liquid cooling system is still a problem that needs to be urgently resolved in the industry.

### SUMMARY

Embodiments of this application provide a thermal management apparatus and an energy storage system. An internal structure design of the thermal management apparatus reduces a volume of the thermal management apparatus in a case of same heat dissipation, and improves space utilization of the thermal management apparatus.

In view of this, embodiments of this application provide the following technical solutions.

According to a first aspect, an embodiment of this application first provides a thermal management apparatus. The apparatus may be used in an energy storage system, and is configured to perform temperature management on an energy storage module in an energy storage device. The thermal management apparatus includes a cabinet, a fan, a first heat dissipation module, and a second heat dissipation module. The fan is disposed on a top surface of the cabinet. The first heat dissipation module and the second heat dissipation module each are a plate structure, and the first heat dissipation module and the second heat dissipation module present an approximate V-shaped structure. A distance between an end that is of the first heat dissipation module and that is close to the top surface and an end that is of the second heat dissipation module and that is close to the top surface is greater than a distance between an end that is of the first heat dissipation module and that is away from the top surface and an end that is of the second heat dissipation module and that is away from the top surface. In other words, an opening direction of the approximate V-shaped structure including the first heat dissipation module and the second heat dissipation module face the top surface of the cabinet. An included angle between the first heat dissipation module and the top surface is not equal to an included angle between the second heat dissipation module and the top surface. In other words, the approximate V-shaped structure including the two heat dissipation modules is asymmetric.

The first heat dissipation module and the second heat dissipation module use the foregoing approximate asymmetric V-shaped structure, so that when a size of internal space of the thermal management apparatus is equal, an area of an air convection heat dissipation region between the two heat dissipation modules can be increased, thereby improving air circulation efficiency of an air field in the thermal management apparatus, and improving heat dissipation efficiency. Conversely, the first heat dissipation module and the second heat dissipation module use the foregoing approximate asymmetric V-shaped structure, so that utilization of the internal space of the thermal management apparatus 1 can be improved and a volume of the thermal management apparatus 1 can be reduced while heat dissipation efficiency remains unchanged.

In a possible implementation, the cabinet further includes a frame. The frame includes an upper frame, a lower frame, and a plurality of columns connecting the upper frame and the lower frame. The frame may provide structural support for the cabinet.

In a possible implementation, a surface that is of the first heat dissipation module and that is away from the second heat dissipation module is covered with a first filter mesh, and an end that is of the first filter mesh and that is close to the top surface is slidably connected to a sliding assembly disposed on an inner surface of the top surface or the upper frame.

The first filter mesh is slidably connected to the cabinet by using the sliding assembly, so that the first filter mesh can be directly pulled out from a side surface of the cabinet for maintenance. This improves maintainability of the first filter mesh.

In a possible implementation, the cabinet further includes a spacer plate, and the spacer plate divides accommodation space inside the cabinet into upper space close to the top surface and lower space away from the top surface, and both the first heat dissipation module and the second heat dissipation module are located in the upper space.

The first heat dissipation module and the second heat dissipation module are disposed in the upper space of the cabinet, so that air convection inside the thermal management apparatus can be accelerated based on a principle of hot air floating up and cold air sinking. This facilitates energy saving.

In a possible implementation, the surface that is of the first heat dissipation module and that is away from the second heat dissipation module is covered with the first filter mesh, and an end that is of the first filter mesh and that is away from the top surface is slidably connected to a second sliding assembly disposed on the spacer plate, and the second sliding assembly is disposed on a surface that is of the spacer plate and that faces the top surface.

The first filter mesh is slidably connected to the cabinet by using the sliding assembly, so that the first filter mesh can be directly pulled out from a side surface of the cabinet for maintenance. This improves maintainability of the first filter mesh.

In a possible implementation, a surface that is of the second heat dissipation module and that is away from the first heat dissipation module is covered with a second filter mesh. The frame further includes a spacer frame disposed between the lower frame and the upper frame in a first direction, and the plurality of columns are sequentially connected to the lower frame, the spacer frame, and the upper frame in the first direction. The second filter mesh is disposed perpendicular to the spacer plate, an end that is of the second filter mesh and that is close to the top surface is detachably fastened to the upper frame, and an end that is of the second filter mesh and that is away from the top surface is detachably fastened to the spacer frame. For example, the detachable fastening manner may be a common detachable fastening manner, for example, connecting two mounting ears or a bayonet through a screw.

The filter mesh is detachably fastened to the frame, so that maintenance personnel can directly take out the filter mesh from a front surface of the cabinet when maintaining the filter mesh. This reduces difficulty in maintaining the filter mesh, reduces maintenance time of the filter mesh, saves maintenance labor costs, facilitates operation, avoids removing other components during maintenance, and improves system reliability.

In a possible implementation, internal components of the thermal management apparatus further include an expansion tank, a liquid refill tank, an oil separator, or a gas-liquid separator, and the expansion tank, the liquid refill tank, the oil separator, or the gas-liquid separator is disposed on the surface that is of the spacer plate and that faces the top surface, and is located between t surface that is of the first heat dissipation module and that is away from the second heat dissipation module and a side surface of the cabinet.

Some components that accommodate liquid or have liquid passed through are placed on the spacer plate. These components are placed in the upper space, and can be separated from other components (for example, an electronic control system) in the lower space by using the spacer plate, so that the components in the lower space can be prevented from directly being in contact with water, and a security risk, for example, a short circuit can be reduced.

In a possible implementation, the included angle between the first heat dissipation module and the top surface is less than the included angle between the second heat dissipation module and the top surface.

When the included angle between the first heat dissipation module and the top surface is less than the included angle between the second heat dissipation module and the top surface, space between the first heat dissipation module and the side surface of the cabinet is larger than space between the second heat dissipation module and the side surface of the cabinet. In this way, the liquid refill tank, the expansion tank, the oil separator, or the gas-liquid separator is disposed between the first heat dissipation module and the side surface of the cabinet. This helps improve space utilization and reduce a volume of the thermal management apparatus.

In a possible implementation, the thermal management apparatus further includes a coolant system and a refrigerant system. The coolant system includes a water pump, a filter, a three-way valve, a liquid refill pump, a heater, or a sensor, and the refrigerant system includes a compressor or a four-way valve. The coolant system and the refrigerant system are disposed in the lower space of the cabinet and are disposed in different areas in the lower space, and the coolant system and the refrigerant system complement and overlap each other. For example, the coolant system and the refrigerant system may be placed in a left area and a right area in the lower space, so that the two systems can be separately maintained from a left side and a right side.

In a possible implementation, the thermal management apparatus further includes an electrical control box. The electrical control box is located in the lower space of the cabinet, and the electrical control box is adjacent to each of two adjacent side surfaces of the cabinet, that is, no other component exists between the electrical control box and the two adjacent side surfaces of the cabinet. In other words, the electrical control box is disposed in a corner of the lower space.

The electrical control box is disposed in the lower space of the cabinet, so that the electrical control box does not block heat dissipation of the two heat dissipation modules in the upper space. This improves heat dissipation efficiency. In addition, the electrical control box and the foregoing coolant system and refrigerant system are disposed in different areas, to implement water and electricity isolation, reduce a short circuit risk, and ensure operation safety of the thermal management apparatus.

In a possible implementation, the electrical control box is connected to one of the plurality of columns through a rotating assembly. For example, the rotating assembly may include a hinge.

The electrical control box is connected to one of the plurality of columns of the frame of the cabinet through the rotating assembly, so that the electrical control box can be rotated out of the cabinet through the rotating assembly for maintenance, to improve maintainability of the electrical control box.

In a possible implementation, at least one lifting eye is disposed on an outer surface of the upper frame of the cabinet, so that a crane hoists the thermal management apparatus by using the lifting eye. Alternatively, a plurality of castors may be disposed on an outer surface of a bottom surface of the cabinet, so that the thermal management apparatus moves by rolling the castors. Alternatively, at least one forklift support may be disposed on the spacer plate, so that the forklift lifts the thermal management apparatus through the forklift support.

By disposing the lifting eye, the castors, or the forklift support on the cabinet, a problem that a liquid cooling unit is large in volume and heavy, and is difficult to carry and transport can be effectively resolved, so that the thermal management apparatus is easy to carry and transport, and is easier to move to an application site.

In a possible implementation, the fan is disposed on an outer surface of the top surface, so that occupation of internal space of the cabinet can be reduced, and a volume of the thermal management module can be further reduced.

In a possible implementation, the first heat dissipation module includes a first refrigerant flow channel plate and a first coolant flow channel plate, and the first refrigerant flow channel plate is attached and fastened to the first coolant flow channel plate; and the second heat dissipation module includes a second refrigerant flow channel plate and a second coolant flow channel plate, and the second refrigerant flow channel plate is attached and fastened to the second coolant flow channel plate. For example, the first refrigerant flow channel plate and the first coolant flow channel plate may be fastened in a fastening manner, for example, sheet metal screwing.

The heat dissipation module is formed in a manner in which the refrigerant flow channel plate is attached and fastened to the coolant flow channel plate, which is equivalent to providing two sets of heat exchange structures for the refrigerant and the coolant. This can further improve heat dissipation efficiency.

According to a second aspect, an embodiment of this application provides an energy storage system, where the energy storage system includes an energy storage module and the thermal management apparatus described in the first aspect. The thermal management apparatus is configured to dissipate heat for the energy storage module.

In a possible implementation, the thermal management apparatus is disposed on the top of the energy storage module, or the thermal management apparatus is attached to a side surface of the energy storage module.

According to the second aspect of embodiments of this application, the beneficial effect described in the first aspect can be achieved. To avoid repetition, details are not described herein again.

### BRIEF DESCRIPTION OF DRAWINGS

FIG. 1A is a diagram of a structure of an energy storage system according to an embodiment of this application;
FIG. 1B is a diagram of another structure of an energy storage system according to an embodiment of this application;
FIG. 2 is a three-dimensional diagram of a thermal management apparatus according to an embodiment of this application;
FIG. 3 is a side view of a part of a thermal management apparatus according to an embodiment of this application;
FIG. 4 is another side view of a part of a thermal management apparatus according to an embodiment of this application;
FIG. 5 is a side view of a thermal management apparatus according to an embodiment of this application;
FIG. 6 is a rear view of a thermal management apparatus according to an embodiment of this application;
FIG. 7 is another three-dimensional diagram of a thermal management apparatus according to an embodiment of this application; and
FIG. 8 is a front view of a thermal management apparatus according to an embodiment of this application.

### Reference numerals:

1: thermal management apparatus; 2: energy storage module; 11: cabinet; 12: fan; 13: first heat dissipation module; 14: second heat dissipation module; 15: spacer plate; 16: liquid refill tank; 17: expansion tank; 18: oil separator; 19: gas-liquid separator; 110: water pump; 111: filter; 112: three-way valve; 113: liquid refill pump; 114: compressor; 115: four-way valve; 116: evaporation plate heat exchanger; 117: electrical control box; 118: rotating assembly; 131: first included angle; 141: second included angle; 132: first filter mesh; 142: second filter mesh; 1101: top surface of cabinet; 1102: bottom surface of cabinet; 1103: side surface of cabinet; 1104: upper space of cabinet; 1105: lower space of cabinet; 1106: lifting eye; 1107: castor; and 1108: forklift support.

### DESCRIPTION OF EMBODIMENTS

The following describes embodiments of this invention with reference to accompanying drawings in embodiments of this invention. In the following descriptions, specific aspects of embodiments of this invention or accompanying drawings in which specific aspects of embodiments of this invention may be used are shown. It should be understood that embodiments of this invention may be used in other aspects, and may include structural or logical changes not depicted in the accompanying drawings. Therefore, the following detailed description shall not be taken in a limiting sense, and the scope of this invention is defined by the appended claims.

It should be noted that, in descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more, and "at least one" and "one or more" mean one, two, or more. The singular expression forms "one", "a", "the", "the foregoing", "this", and "the one" are also intended to include an expression form such as "one or more", unless the opposite is explicitly indicated in the context thereof.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", and "have", and their variants all mean "include but are not limited to", unless otherwise specifically emphasized in another manner.

In descriptions of embodiments of this application, an orientation or a position relationship indicated by terms such as "upper", "lower", "left", "right", "vertical", and "horizontal" is defined relative to directions or positions of components schematically placed in the accompanying drawings. It should be understood that these directional terms are relative concepts and are used for relative description and clarification, and are not used to indicate or imply that an indicated apparatus or element needs to have a specified direction or be constructed and operated in a specified direction. The terms may change accordingly with directions in which parts in the accompanying drawings are placed, and therefore cannot be construed as a limitation of this application.

In embodiments of this application, a same reference numeral indicates a same part or a same component. In addition, components in the accompanying drawings are not drawn according to a proportion, and dimensions and sizes of the components shown in the figures are only examples, and should not be construed as a limitation on this application.

In this application, unless otherwise explicitly specified and limited, terms such as "mounting", "connected to", "connected", "fastened", "connection", and "configuration" should be understood in a broad sense. For example, the "connection" may be a fastened connection, a detachable connection, detachably fastened, or an integrated connection; may be a mechanical connection, or may be an electrical connection; and may be a direct connection, may be an indirect connection via an intermediate medium, or may be a connection inside two components or an interaction relationship between two components, unless otherwise specified. A person of ordinary skill in the art may understand specific meanings of the foregoing terms in this application based on specific situations.

It should be noted that, when the component is referred to as "fastened to", "disposed on", or "configured on" another component, the device may be directly on the another component, or a mediate component may simultaneously exist. When a component is considered to be "connected" to another component, the component may be directly connected to the another component, or a mediate component may simultaneously exist. The terms "vertical", "horizontal", "up", "down", "left", "right", and similar expressions used in this specification are only for description, and do not indicate a unique implementation.

Terms used in the implementation part of this invention are only intended to explain specific embodiments of this invention, but are not intended to limit this invention.

With development of new energy technologies, importance and complexity of an energy storage system gradually increase. In addition to an energy storage module, the energy storage system also needs to meet requirements for heat dissipation and heat preservation of the energy storage module at various ambient temperatures. A thermal management apparatus of the energy storage system not only needs to dissipate heat generated by components such as a battery module in an operating process in time, but also needs to provide a proper operating ambient temperature for the battery module and the like in cold weather.

Generally, the thermal management apparatus in the energy storage system uses a refrigerant loop and a coolant loop to connect components for heat exchange, to maintain a heat requirement of each component. However, there are a large quantity of coolant loops and refrigerant loops, and pipelines are complex. In addition, using a plurality of pipelines for connection causes problems such as complex mounting of a thermal management apparatus, large space occupation, low heat efficiency, difficult maintenance, and an excessively large maintenance area. This increases operation and maintenance costs of an energy storage system and affects a service life and stability of the energy storage system. Therefore, integration, miniaturization, easy maintenance, and the like of the thermal management apparatus in the energy storage system have become an industry trend.

An embodiment of this application provides a thermal management apparatus. A manner of arranging an internal component in the thermal management apparatus is properly set, so that space utilization of the thermal management apparatus is improved, and a volume of the thermal management apparatus is reduced. In addition, a manner of mounting the internal component of the thermal management apparatus is properly set, so that a maintenance process of the thermal management apparatus is easier, and maintainability of the thermal management apparatus is improved.

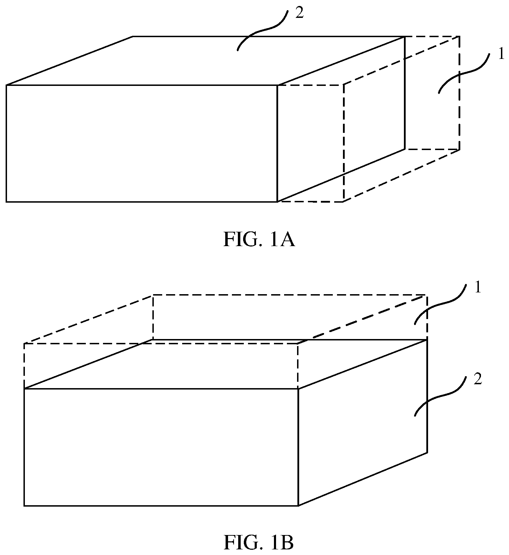

An embodiment of this application further provides an energy storage system. The energy storage system includes a thermal management apparatus 1 and an energy storage module 2. The thermal management apparatus 1 is configured to exchange heat with the energy storage module 2. FIG. 1A and FIG. 1B each are a diagram of a structure of an energy storage system according to an embodiment of this application. The thermal management apparatus 1 provided in this embodiment of this application may be disposed on a side end of the energy storage module 2 as shown in FIG. 1A, or may be disposed on the top of the energy storage module 2 as shown in FIG. 1B.

The thermal management apparatus 1 mainly includes two operating modes. In the first operating mode, the thermal management apparatus 1 mainly provides liquid obtained through cooling for the energy storage module 2. Because the energy storage module 2 generates heat in a process of charging and discharging, and heat of a battery electric core is excessively high, a service life of the battery electric core is affected. Therefore, the thermal management apparatus 1 is used to perform cooling, to ensure a proper operating temperature of the energy storage module 2 and improve the service life of the battery electric core. In the second operating mode, in an extremely cold area, a temperature of the energy storage module 2 is low, and a stored power decreases. In this case, the thermal management apparatus 1 may include a heater, the heater communicates with a liquid pipeline of the thermal management apparatus 1, and liquid is heated in the liquid pipeline, to raise the temperature of the energy storage module 2, to ensure that a battery electric core always runs at a proper temperature. This helps improve a service life of the battery electric core.

In addition to the thermal management apparatus 1, to perform thermal management on the energy storage module 2, the thermal management system usually further includes one or more liquid inlet pipes, one or more liquid return pipes, and one or more liquid cooling tube platforms. The thermal management apparatus 1 is usually a centralized thermal management cabinet, that is, one thermal management cabinet controls one or more liquid inlet pipes and one or more liquid return pipes, the one or more liquid inlet pipes communicate with a liquid outlet of the thermal management cabinet, and the one or more liquid return pipes communicate with a liquid inlet of the thermal management cabinet. The liquid cooling tube platforms are usually disposed close to the energy storage module, to facilitate heat exchange with the energy storage module. One or more liquid inlet pipes communicate with liquid inlets of one or more liquid cooling tube platforms in a one-to-one correspondence, one or more liquid return pipes may communicate with liquid outlets of one or more liquid cooling tube platforms in a one-to-one correspondence, and one or more liquid cooling tube platforms and one or more battery modules are disposed in a one-to-one correspondence. In this way, the coolant can circulate between the thermal management cabinet, the liquid inlet pipe, the liquid return pipe, and the liquid cooling tube platform. Heat generated by the energy storage module can be absorbed and conducted out, to achieve a purpose of cooling the energy storage module. In addition, the coolant can be heated, to conduct heat to the energy storage module, to raise the temperature of the energy storage module.

The energy storage system provided in embodiments of this application may be used in but is not limited to industrial and commercial energy storage scenarios such as a small industrial and commercial industry (for example, a small factory), a medium industrial and commercial industry, a large industrial and commercial industry, a station of integration of PV+ESS+charger, and a small or medium microgrid (for example, an island), and power station scenarios such as a wind/solar energy storage power station, a grid energy storage power station, and a large microgrid, to store and release electric energy. During actual application, the energy storage system may be represented in a form of energy storage cabinet, energy storage container, or the like.

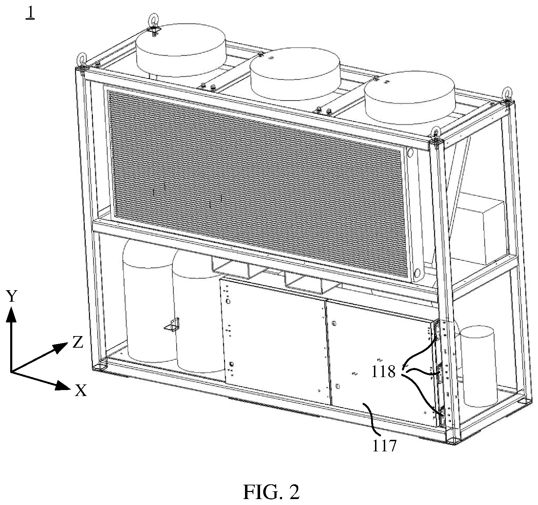

FIG. 2 is a three-dimensional diagram of the thermal management apparatus 1 according to this embodiment of this application. For ease of description, a reference coordinate system is set based on directions X, Y, and Z in the figure, and a first direction Y, a second direction X, and a third direction Z are set. Any two of the first direction Y, the second direction X, and the third direction Z are set to be perpendicular to each other, and the first direction Y is parallel to a direction of gravity. A surface that is seen in the third direction Z direction and that is of the thermal management apparatus 1 is referred to as a front surface of the thermal management apparatus 1, and a surface that is seen in the second direction X and that is of the thermal management apparatus 1 is referred to as a side surface of the thermal management apparatus 1.

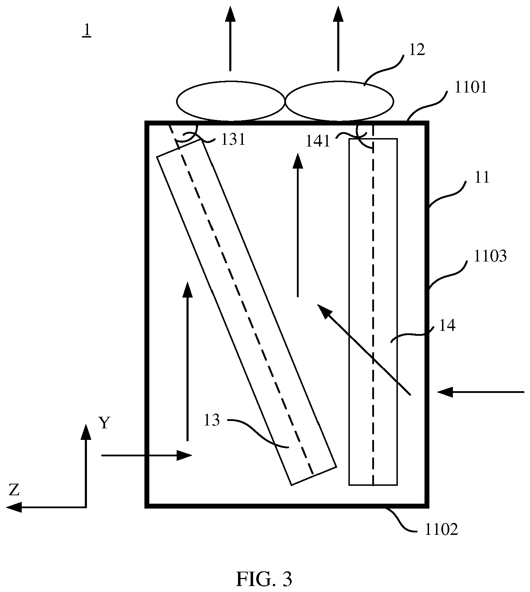

In this embodiment of this application, FIG. 3 is a side view of a part of a thermal management apparatus 1 according to an embodiment of this application. As shown in FIG. 3, the thermal management apparatus 1 includes a cabinet 11, a fan 12, a first heat dissipation module 13, and a second heat dissipation module 14.

The cabinet 11 includes a top surface 1101, a bottom surface 1102, and four side surfaces 1103. The top surface 1101, the bottom surface 1102, and the four side surfaces 1103 are enclosed to form accommodation space inside the cabinet. In a possible implementation, the cabinet may include a frame and a cabinet plate, where the frame includes a lower frame, a spacer frame, and an upper frame that are disposed sequentially in a first direction Y, and a plurality of columns that are connected to the lower frame, the spacer frame, and the upper frame sequentially in the first direction Y. The lower frame, the spacer frame, and the upper frame are usually rectangular frames. The cabinet plate includes a first cabinet plate disposed on the top of the cabinet, a second cabinet plate disposed on a side surface of the cabinet, and a third cabinet plate disposed on the bottom of the cabinet. The first cabinet plate, the second cabinet plate, and the third cabinet plate are enclosed to form accommodation space inside the cabinet. In this case, the first cabinet plate is the top surface 1101 of the cabinet 11, the second cabinet plate is the side surface 1103 of the cabinet 11, and the third cabinet plate is the bottom surface 1102 of the cabinet 11. The first cabinet plate, the second cabinet plate, and the third cabinet plate are detachably connected to the cabinet 11, for example, may be detachably fastened through a screw, a bayonet, or the like, to facilitate removal of the cabinet plate during maintenance. Based on an actual product requirement, the cabinet plate may alternatively be partially hollow. It should be understood that, in an actual product, the cabinet plate may be fastened to the frame to form a cabinet, and the cabinet plate and the frame may alternatively be integrated to form a cabinet. A specific shape and a mounting combination manner of the cabinet are not limited in embodiments of this application.

The fan 12 is disposed on the top surface 1101 of the cabinet 11, so that air convection inside the thermal management apparatus 1 can be accelerated based on a principle of hot air floating up and cold air sinking. This facilitates energy saving. In a possible implementation, as shown in FIG. 3, the fan 12 may be disposed on an outer surface of the top surface 1101, so that occupation of internal space of the cabinet 11 can be reduced, and a volume of the thermal management module 1 can be further reduced. In another possible implementation, the fan 12 may alternatively be disposed on an inner surface of the top surface 1101. A specific arrangement manner of the fan 12 is not limited in embodiments of this application. Based on an actual product requirement, two fans 12 or three fans 12 may be disposed on the top surface 1101 of the cabinet 11. A quantity of fans 12 may be set based on a specific product requirement. A specific quantity of fans is not limited in embodiments of this application. Optionally, considering that the fan 12 may hurt an operator in an operating process, a protective cover may be sleeved outside the fan 12, so that the operator can be prevented from being injured due to accidental touch, and the fan 12 can be prevented from being damaged because sundries in the environment can be prevented from entering the fan 12.

The first heat dissipation module 13 and the second heat dissipation module 14 each are a plate structure, for example, a plate structure, or a plate structure with a specific radian. For ease of description, in this embodiment of this application, an end that is of the first heat dissipation module 13 and that is close to the top surface 1101 is defined as a first end of the first heat dissipation module 13, an end that is of the first heat dissipation module 13 and that is away from the top surface 1101 is defined as a second end of the first heat dissipation module 13, an end that is of the second heat dissipation module 14 and that is close to the top surface 1101 is defined as a first end of the second heat dissipation module 14, and an end that is of the second heat dissipation module 14 and that is away from the top surface 1101 is defined as a second end of the second heat dissipation module 14.

In this embodiment of this application, the two heat dissipation modules are disposed in a V-shaped structure that may be approximately asymmetric. The reason why the V-shaped structure is approximately the V-shaped structure is that ends that are close to each other and that are of the two heat dissipation modules may be in contact with each other, or may not be in contact with each other (there is a specific distance). An opening direction of the approximate V-shaped structure faces the fan 12, that is, the opening direction of the approximate V-shaped structure faces the top surface 1101. In other words, a distance between the first end of the first heat dissipation module 13 and the first end of the second heat dissipation module 14 is greater than a distance between the second end of the first heat dissipation module 13 and the second end of the second heat dissipation module 14. In a possible implementation, the distance between the first end of the first heat dissipation module 13 and the first end of the second heat dissipation module 14 may be specifically a distance in a third direction Z, and may be measured by measuring a distance between a projection that is of the first end of the first heat dissipation module 13 and that is in the first direction Y direction and a projection that is of the first end of the second heat dissipation module 14 and that is in the first direction Y direction. Similarly, the distance between the second end of the first heat dissipation module 13 and the second end of the second heat dissipation module 14 may be specifically a distance in the third direction Z, and may be measured by measuring a distance between a projection that is of the second end of the first heat dissipation module 13 and that is in the first direction Y direction and a projection that is of the second end of the second heat dissipation module 14 and that is in the first direction Y direction.

The first heat dissipation module 13 and the second heat dissipation module 14 release a large amount of heat during operation. Therefore, the fan 12 and the opening direction of the approximate V-shaped structure including the two heat dissipation modules are disposed opposite to each other, so that the heat released by the heat dissipation module can be transferred to an outer side of the cabinet 11 in time. This improves heat dissipation efficiency.

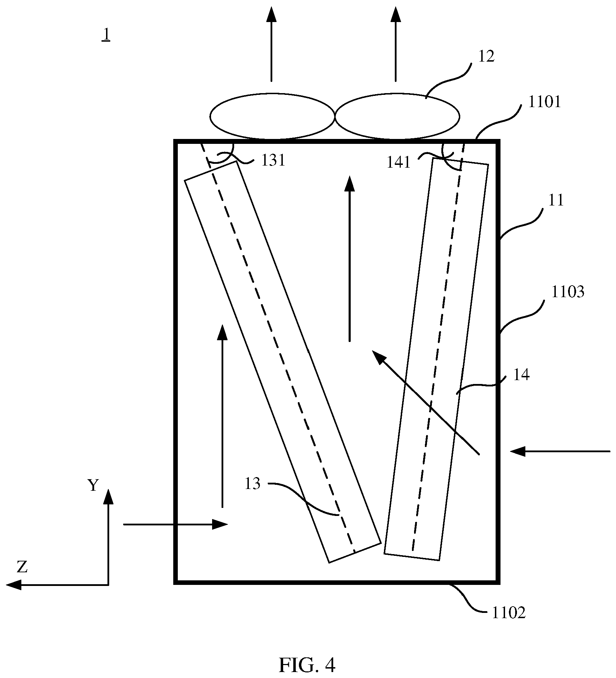

A first included angle 131 exists between the first heat dissipation module 13 and the top surface 1101, and a second included angle 141 exists between the second heat dissipation module 14 and the top surface 1101. It should be noted that an included angle between a heat dissipation module and the top surface is an included angle (an acute angle or a right angle) between a surface on which the heat dissipation module is located and the top surface. In a possible implementation, the first heat dissipation module 13 may be not a flat plate structure. In this case, an included angle between the top surface 1101 and a straight line that connects the first end and the second end of the first heat dissipation module 13 may be used as the first included angle 131. Similarly, the second heat dissipation module 14 may be not a flat plate structure. In this case, an included angle between the top surface 1101 and a straight line that connects the first end and the second end of the first heat dissipation module 14 may be used as the second included angle 141. In this embodiment of this application, the first included angle is not equal to the second included angle, that is, the approximate V-shaped structure including the two heat dissipation modules is asymmetric. In a possible implementation, as shown in FIG. 3, the included angle between the first heat dissipation module 13 and the top surface 1101 is an acute angle, and the included angle between the second heat dissipation module 14 and the top surface 1101 is a right angle. In other words, the second heat dissipation module 14 is disposed perpendicular to the top surface 1101. In this case, the first included angle is less than the second included angle. In another possible implementation, as shown in FIG. 4, both the included angle between the first heat dissipation module 13 and the top surface 1101 and the included angle between the second heat dissipation module 14 and the top surface 1101 are acute angles, and the first included angle 131 is less than the second included angle 141.

The first heat dissipation module 13 and the second heat dissipation module 14 use the approximate asymmetric V-shaped structure shown in FIG. 3 or FIG. 4, so that when a size of internal space of the thermal management apparatus 1 is equal, an area of an air convection heat dissipation region between the two heat dissipation modules can be increased, thereby improving air circulation efficiency of an air field in the thermal management apparatus, and improving heat dissipation efficiency. Conversely, the first heat dissipation module 13 and the second heat dissipation module 14 use the approximate asymmetric V-shaped structure shown in FIG. 3 or FIG. 4, so that utilization of the internal space of the thermal management apparatus 1 can be improved and a volume of the thermal management apparatus 1 can be reduced while heat dissipation efficiency remains unchanged.

The first heat dissipation module 13 and the second heat dissipation module 14 may include a double heat dissipation structure. Specifically, the first heat dissipation module 13 may include a first refrigerant flow channel plate and a first coolant flow channel plate, and the second heat dissipation module 14 may include a second refrigerant flow channel plate and a second coolant flow channel plate.

The first heat dissipation module 13 is used as an example for description. The first refrigerant flow channel plate may be a circular pipe heat exchanger or a microchannel heat exchanger. When the circular pipe heat exchanger is used, the first refrigerant flow channel plate includes several fins and a circular pipe inserted between the fins. When the microchannel heat exchanger is used, the first refrigerant flow channel plate includes several fins and a microchannel inserted between the fins. Similarly, the first coolant flow channel plate may be a circular pipe heat exchanger or a microchannel heat exchanger. When the circular pipe heat exchanger is used, the first coolant flow channel plate includes several fins and a circular pipe inserted between the fins. When the microchannel heat exchanger is used, the first coolant flow channel plate includes several fins and a microchannel inserted between the fins. The first refrigerant flow channel plate is attached and fastened to the first coolant flow channel plate. For example, the first refrigerant flow channel plate and the first coolant flow channel plate may be fastened in a fastening manner, for example, sheet metal screwing. A manner in which the first refrigerant flow channel plate is fastened to the first coolant flow channel plate is not limited in embodiments of this application. The first refrigerant flow channel plate may be partially or may be completely attached and fastened to the first coolant flow channel plate. A manner and an area in which the first refrigerant flow channel plate is attached to the first coolant flow channel plate are not limited in embodiments of this application. The first refrigerant flow channel plate and the first coolant flow channel plate may alternatively use another heat exchange structure other than the circular pipe heat exchanger and the microchannel heat exchanger. Specific structures of the first refrigerant flow channel plate and the first coolant flow channel plate are not limited in embodiments of this application. The second heat dissipation module 14 and the first heat dissipation module 13 use a same or similar structure design. To avoid repetition, details are not described again.

For example, a refrigerant, for example, freon and ammonia may flow in a pipeline in the refrigerant flow channel plate, and a coolant, for example, glycol, glycol solution, and water may flow in a pipeline in the coolant flow channel plate. It should be understood that the foregoing examples of the refrigerant and the coolant are only examples, and compositions of the refrigerant and the coolant are not limited in embodiments of this application.

The heat dissipation module is formed in a manner in which the refrigerant flow channel plate is attached and fastened to the coolant flow channel plate, which is equivalent to providing two sets of heat exchange structures for the refrigerant and the coolant. This can further improve heat dissipation efficiency.

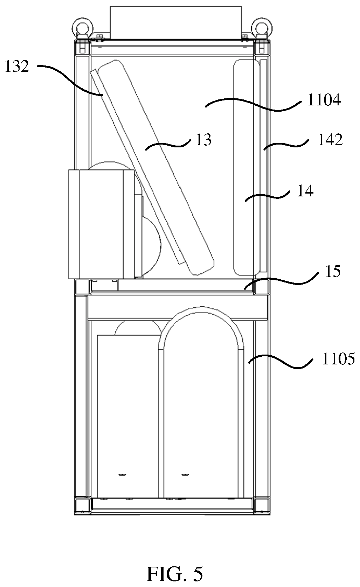

FIG. 5 is a side view of a thermal management apparatus according to an embodiment of this application. As shown in FIG. 5, in this embodiment of this application, the thermal management apparatus 1 further includes a spacer plate 15. The spacer plate 15 divides accommodation space inside the cabinet 11 into upper space 1104 and lower space 1105. The upper space 1104 is closer to the top surface 1101 of the cabinet 11 than the lower space 1105. Both the first heat dissipation module 13 and the second heat dissipation module 14 are located in the upper space 1104. The first heat dissipation module 13 and the second heat dissipation module 14 are disposed in the upper space 1104 of the cabinet, so that air convection inside the thermal management apparatus can be accelerated based on a principle of hot air floating up and cold air sinking. This facilitates energy saving.

In this embodiment of this application, as shown in FIG. 5, a surface that is of the first heat dissipation module 13 and that is away from the second heat dissipation module 14 is covered with a first filter mesh 132, and a surface that is of the second heat dissipation module 14 and that is away from the first heat dissipation module 13 is covered with a second filter mesh 142. For ease of description, in this embodiment of this application, an end that is of the first filter mesh 132 and that is close to the top surface 1101 is referred to as a first end of the first filter mesh 132, an end that is of the first filter mesh 132 and that is away from the top surface 1101 is referred to as a second end of the first filter mesh 132, an end that is of the second filter mesh 142 and that is close to the top surface 1101 is referred to as a first end of the second filter mesh 142, and an end that is of the second filter mesh 142 and that is away from the top surface 1101 is referred to as a second end of the second filter mesh 142.

In this embodiment of this application, a manner of mounting the first filter mesh 132 and the second filter mesh 142 is improved, so that the first filter mesh 132 and the second filter mesh 142 are easier to maintain.

Specifically, when an included angle between a heat dissipation module and the top surface 1101 is an acute angle, that is, when the heat dissipation module is not disposed perpendicular to the top surface 1101, a filter mesh corresponding to the heat dissipation module may be slidably connected to the cabinet 11 by using a sliding assembly. The first filter mesh 132 is used as an example for description. The first filter mesh 132 is slidably connected to the cabinet 11 by using the sliding assembly, so that the first filter mesh 132 can be directly pulled out from a side surface of the cabinet 11 for maintenance. This improves maintainability of the first filter mesh 132. In a possible implementation, two ends of the first filter mesh 132 are slidably connected to the cabinet 11 by using sliding assemblies. Specifically, the second end of the first filter mesh 132 is slidably connected to a surface that is of the spacer plate 15 and that faces the top surface 1101, and the first end of the first filter mesh 132 may be slidably connected to the top surface 1101 or the upper frame of the cabinet based on an actual product requirement. For example, a second sliding assembly may be disposed on the surface that is of the spacer plate 15 and that faces the top surface 1101, and the second end of the first filter mesh 132 is slidably connected to the second sliding assembly. In addition, a first sliding assembly may be disposed on an inner surface of the top surface 1101 or an inner side of the upper frame, and the first end of the first filter mesh 132 is slidably connected to the first sliding assembly. In another possible implementation, one end of the first filter mesh 132 may be slidably connected to the cabinet 11 by using the sliding assembly, and the other end of the first filter mesh 132 may be detachably fastened to the cabinet 11, or the first filter mesh 132 may be directly placed on the cabinet 11. For example, the sliding assembly may be a component that can implement sliding connection, for example, a guide rail. A specific implementation of the sliding assembly is not limited in embodiments of this application.

The filter mesh is slidably connected to the cabinet, so that maintenance personnel can directly pull out the filter mesh in a direction of the guide rail when maintaining the filter mesh. This reduces difficulty in maintaining the filter mesh, reduces maintenance time of the filter mesh, saves maintenance labor costs, facilitates operation, avoids removing other components during maintenance, and improves system reliability.

It should be understood that, when the second heat dissipation module 14 is not disposed perpendicular to the top surface 1101, the second filter mesh 142 may also be connected to the cabinet 11 in the foregoing sliding connection manner. To avoid repetition, details are not described again.

When the included angle between the heat dissipation module and the top surface 1101 is a right angle, that is, when the heat dissipation module is disposed perpendicular to the top surface 1101 and the spacer plate 15, a filter mesh corresponding to the heat dissipation module may be detachably fastened to the frame of the cabinet 11. The second filter mesh 142 is used as an example for description. The second filter mesh 142 is disposed perpendicular to the top surface 1101 and the spacer plate 15. The second filter mesh 142 is detachably fastened to the frame of the cabinet, so that the second filter mesh 142 can be taken out from a front surface of the cabinet 11 for maintenance. This improves maintainability of the second filter mesh 142. Specifically, the first end of the second filter mesh 142 is detachably fastened to the upper frame, and the second end of the second filter mesh 142 is detachably fastened to a spacer frame. For example, the detachable fastening manner may be a common detachable fastening manner, for example, connecting two mounting ears or a bayonet through a screw. A specific detachable fastening manner between the filter mesh and the frame is not limited in this application.

The filter mesh is detachably fastened to the frame, so that maintenance personnel can directly take out the filter mesh from the front surface of the cabinet when maintaining the filter mesh. This reduces difficulty in maintaining the filter mesh, reduces maintenance time of the filter mesh, saves maintenance labor costs, facilitates operation, avoids removing other components during maintenance, and improves system reliability.

The following describes an arrangement of a plurality of components disposed inside the thermal management apparatus 1. First, a component arrangement in the upper space 1104 of the cabinet 11 is described. As shown in FIG. 5, some components that accommodate liquid or have liquid passed through are placed on the spacer plate 15. These components are placed in the upper space 1104, and can be separated from other components (for example, an electronic control system) in the lower space 1105 by using the spacer plate 15, so that the components in the lower space 1105 can be prevented from directly being in contact with water, and a security risk, for example, a short circuit can be reduced.

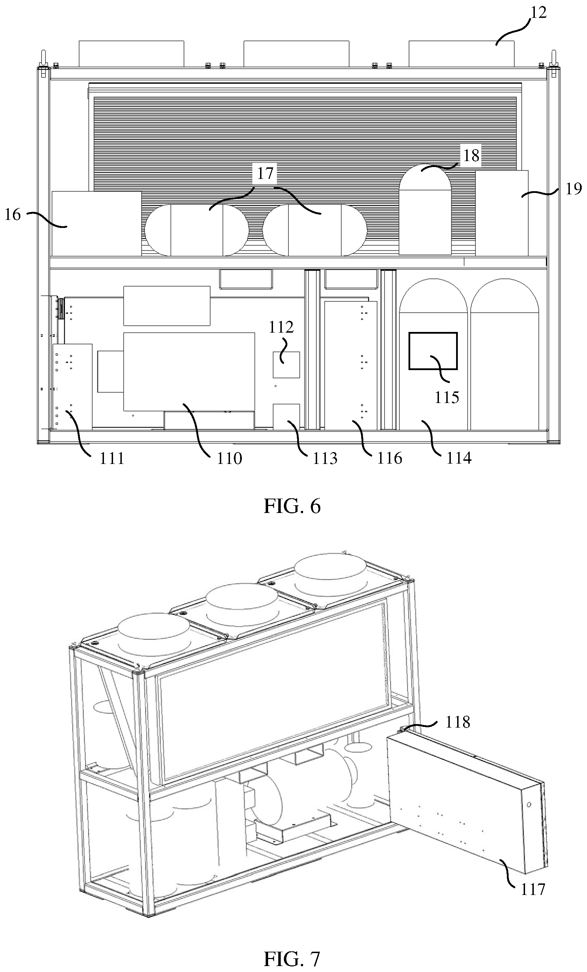

FIG. 6 is a rear view of a thermal management apparatus according to an embodiment of this application. Specifically, as shown in FIG. 6, components placed on the spacer plate 15 include a liquid refill tank 16, expansion tanks 17, an oil separator 18, and a gas-liquid separator 19. The liquid refill tank 16 accommodates liquid, and is configured to replenish a liquid pipeline with the liquid. Because the liquid runs efficiently under a circulation action of the water pump, the liquid is continuously reduced due to losses such as evaporation and leakage. The liquid refill tank 16 can be disposed to ensure safety of the thermal management apparatus 1 and effect of temperature control. Because the thermal management apparatus 1 can heat the coolant in the liquid pipeline when the energy storage module needs to heat up, when the coolant temperature increases, a liquid volume in the liquid pipeline increases; and when the liquid pipeline cannot accommodate this part of expansion amount, pressure in the liquid pipeline increases. This affects normal operation of the liquid pipeline. Therefore, one or more expansion tanks 17 may be disposed, so that the one or more expansion tanks 17 communicate with the liquid pipelines. The expansion tank 17 is configured to accommodate an expansion amount of the liquid pipeline, so that pressure fluctuation caused by the expansion of the liquid pipeline can be reduced, and operation safety and reliability of the thermal management apparatus 1 can be improved. The oil separator 18 is configured to separate lubricant in high-pressure steam discharged by a refrigeration compressor, to ensure that the thermal management apparatus runs safely and efficiently. The gas-liquid separator 19 is configured to separate and store liquid in a return gas pipe, to prevent liquid shock to the compressor, and protect the compressor. It should be understood that relative positions and quantities of the components in FIG. 6 are only examples, and relative positions and quantities of the foregoing four components are not limited in embodiments of this application. It should be understood that the upper space 1104 of the thermal management apparatus 1 may further accommodate another container that needs to accommodate liquid or that flows through liquid. This is not limited in this application.

In this embodiment of this application, the liquid refill tank 16, the expansion tank 17, the oil separator 18, and the gas-liquid separator 19 each are disposed between the side surface 1103 of the cabinet 11 and the surface that is of the first heat dissipation module 13 and that is away from the second heat dissipation module 14, and the first included angle 131 is less than a second included angle 132. When the first included angle 131 is less than the second included angle 132, space between the first heat dissipation module 13 and the side surface 1103 of the cabinet 11 is larger than space between the second heat dissipation module 14 and the side surface 1103 of the cabinet 11. In this way, the liquid refill tank 16, the expansion tank 17, the oil separator 18, and the gas-liquid separator 19 are disposed between the first heat dissipation module 13 and the side surface 1103 of the cabinet 11. This helps improve space utilization and reduce a volume of the thermal management apparatus 1.

Then, a component arrangement in the lower space 1105 of the cabinet 11 is described. The lower space 1105 of the cabinet 11 is mainly used to place components of the two systems, namely, the coolant system and the refrigerant system. The two systems are placed in different areas, and do not cross and do not interfere with each other. This facilitates independent maintenance. Specifically, the lower space 1105 of the cabinet 11 includes first space and second space that do not overlap, the coolant system is placed in the first space, and the refrigerant system is placed in the second space. The coolant system includes one or more components of a water pump 110, a filter 111, a three-way valve 112, and a liquid refill pump 113. The refrigerant system includes one or more components of the compressor 114 and the four-way valve 115. For example, the coolant system and the refrigerant system may be placed in a left and a right area in the lower space 1105, so that the two systems can be separately maintained from a left side and a right side. The thermal management apparatus further includes an evaporation plate heat exchanger 116. In an operating process of the thermal management apparatus 1, the evaporation plate heat exchanger 116 is reused by the coolant system and the refrigerant system. Therefore, the evaporation plate heat exchanger 116 may be located between the coolant system and the refrigerant system, that is, located between the first space and the second space, to reduce a length of a liquid pipeline disposed inside the thermal management apparatus 1.

In this embodiment of this application, as shown in FIG. 2, the thermal management apparatus 1 further includes an electrical control box 117. The electrical control box 117 is configured to accommodate an electrical control system. The electrical control box 117 is located in the lower space 1105 of the cabinet 11, and the electrical control box 117 is adjacent to each of two adjacent side surfaces of the cabinet 11. In other words, the electrical control box 117 is disposed in a corner of the lower space *1105* of the cabinet 11, and is disposed close to the side surface of the cabinet. The electrical control box 117 is disposed in the lower space 1105 of the cabinet 11, so that the electrical control box 117 does not block heat dissipation of the two heat dissipation modules in the upper space 1104. This improves heat dissipation efficiency. In addition, the electrical control box 117 and the foregoing coolant system and refrigerant system are disposed in different areas, to implement water and electricity isolation, reduce a short circuit risk, and ensure operation safety of the thermal management apparatus 1.

Further preferably, the electrical control box 117 may be connected to one of the plurality of columns of the frame of the cabinet 11 through the rotating assembly, so that the electrical control box 117 can be rotated out of the cabinet 11 through the rotating assembly for maintenance as shown in FIG. 7, to improve maintainability of the electrical control box 117. For example, the rotating assembly may be a common rotatable connecting component, for example, a hinge, a rotating shaft, and a shaft hole that are rotatably connected to each other. It should be understood that the foregoing example of the rotating assembly is only an example, and a specific implementation of the rotating assembly is not limited in embodiments of this application.

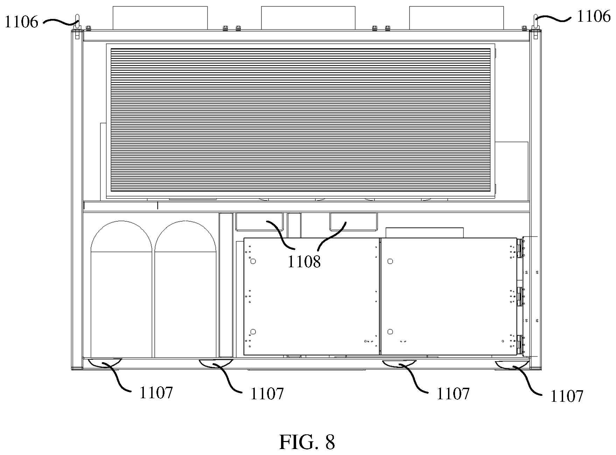

FIG. 8 is a front view of the thermal management apparatus 1 according to this embodiment of this application. As shown in FIG. 8, in a possible implementation, at least one lifting eye 1106 is disposed on an outer surface of the upper frame of the cabinet 11, so that a crane hoists the thermal management apparatus 1 through the lifting eye 1106. In another possible implementation, the lifting eye 1106 may be further disposed on an outer surface of the first cabinet plate on the top of the cabinet. In addition, a plurality of castors 1107 may be further disposed on an outer surface of a bottom surface of the cabinet 11, so that the thermal management apparatus 1 moves by rolling the castors 1107. In addition, at least one forklift support 1108 may be further disposed on the spacer plate 15, so that a forklift lifts the thermal management apparatus 1 through the forklift support 1108. In a possible implementation, the forklift support 1108 may be disposed on a surface that is of the spacer plate 15 and that faces the top surface 1101. In another possible implementation, the forklift support 1108 may alternatively be disposed on the surface that is of the spacer plate 15 and that faces the bottom surface 1102. It should be understood that quantities and specific positions of lifting eyes 1106, the castors 1107, and forklift supports 1108 shown in FIG. 8 are only examples, and may be adjusted based on a specific product requirement. The quantities and specific positions of the lifting eye 1106, the castors 1107, and the forklift supports 1108 are not limited in embodiments of this application.

By disposing the lifting eye 1106, the castors 1107, or the forklift support 1108 on the cabinet 11, a problem that a liquid cooling unit is large in volume and heavy, and is difficult to carry and transport can be effectively resolved, so that the thermal management apparatus 1 is easy to carry and transport, and is easier to move to an application site.

It should be understood that the coolant flow channel plate is only a name, and does not constitute any special limitation on this application. In some embodiments, the coolant flow channel plate may also be referred to as a water flow channel plate, a water flow channel plate, a coolant flow channel plate, or the like. This is not specifically limited in this application. The refrigerant flow channel plate is only a name, and does not constitute any special limitation on this application. In some embodiments, the refrigerant flow channel plate may also be referred to as a refrigerated body flow channel plate, a refrigerated body flow channel plate, a refrigerant flow channel plate, or the like. This is not specifically limited in this application. Similarly, the thermal management apparatus, the energy storage module, the cabinet, the fan, the heat dissipation module, the spacer plate, the liquid refill tank, the expansion tank, the oil separator, the gas-liquid separator, the water pump, the filter, the three-way valve, the liquid filling pump, the compressor, the four-way valve, the evaporation plate heat exchanger, the electrical control box, the lifting eye, the castor, the forklift support, and the like mentioned in embodiments of this application are all names, and may also be other similar names. This is not specifically limited in this application.

The foregoing descriptions are only optional embodiments of this disclosure, but are not intended to limit this disclosure. Any modification, equivalent replacement, or improvement made without departing from the principle of this disclosure should fall within the protection scope of this disclosure.

## Claims

1. A thermal management apparatus, wherein the thermal management apparatus comprises a cabinet, a fan, a first heat dissipation module, and a second heat dissipation module;
the fan is disposed on a top surface of the cabinet;
the first heat dissipation module and the second heat dissipation module each are a plate structure, and a first included angle between the first heat dissipation module and the top surface is unequal to a second included angle between the second heat dissipation module and the top surface; and
a distance between a first end of the first heat dissipation module and a first end of the second heat dissipation module is greater than a distance between a second end of the first heat dissipation module and a second end of the second heat dissipation module, wherein the first end of the first heat dissipation module is an end that is of the first heat dissipation module and that is close to the top surface, the second end of the first heat dissipation module is an end that is of the first heat dissipation module and that is away from the top surface, the first end of the second heat dissipation module is an end that is of the second heat dissipation module and that is close to the top surface, and the second end of the second heat dissipation module is an end that is of the second heat dissipation module and that is away from the top surface.

2. The thermal management apparatus according to claim 1, wherein
the cabinet further comprises a frame, and the frame comprises an upper frame, a lower frame, and a plurality of columns connecting the upper frame and the lower frame.

3. The thermal management apparatus according to claim 2, wherein
a surface that is of the first heat dissipation module and that is away from the second heat dissipation module is covered with a first filter mesh;
a first end of the first filter mesh is slidably connected to a first sliding assembly, and the first end of the first filter mesh is an end that is of the first filter mesh and that is close to the top surface; and
the first sliding assembly is disposed on an inner surface of the top surface or the upper frame.

4. The thermal management apparatus according to claim 2 or 3, wherein
the cabinet further comprises a spacer plate, wherein the spacer plate divides internal space of the cabinet into upper space and lower space, the upper space is close to the top surface, and the lower space is away from the top surface; and
both the first heat dissipation module and the second heat dissipation module are located in the upper space.

5. The thermal management apparatus according to claim 4, wherein
the surface that is of the first heat dissipation module and that is away from the second heat dissipation module is covered with the first filter mesh; and
a second sliding assembly is disposed on a surface that is of the spacer plate and that faces the top surface, a second end of the first filter mesh is slidably connected to the second sliding assembly, and the second end of the first filter mesh is an end that is of the first filter mesh and that is away from the top surface.

6. The thermal management apparatus according to claim 4 or 5, wherein
a surface that is of the second heat dissipation module and that is away from the first heat dissipation module is covered with a second filter mesh;
the frame further comprises a spacer frame disposed between the lower frame and the upper frame in a first direction, and the plurality of columns are sequentially connected to the lower frame, the spacer frame, and the upper frame in the first direction; and
the second filter mesh is disposed perpendicular to the spacer plate, a first end of the second filter mesh is detachably fastened to the upper frame, a second end of the second filter mesh is detachably fastened to the spacer frame, the first end of the second filter mesh is an end that is of the second filter mesh and that is close to the top surface, and the second end of the second filter mesh is an end that is of the second filter mesh and that is away from the top surface.

7. The thermal management apparatus according to any one of claims 4 to 6, wherein
an expansion tank, a liquid refill tank, an oil separator, or a gas-liquid separator is disposed on the surface that is of the spacer plate and that faces the top surface, and the expansion tank, the liquid refill tank, the oil separator, or the gas-liquid separator is located between the surface that is of the first heat dissipation module and that is away from the second heat dissipation module and a side surface of the cabinet.

8. The thermal management apparatus according to any one of claims 4 to 7, wherein
the lower space comprises first space and second space that do not overlap; and
the thermal management apparatus further comprises a coolant system and a refrigerant system, the coolant system is placed in the first space, the refrigerant system is placed in the second space, the coolant system comprises a water pump, a filter, a three-way valve, a liquid refill pump, a heater, or a sensor, and the refrigerant system comprises a compressor or a four-way valve.

9. The thermal management apparatus according to any one of claims 4 to 8, wherein
the thermal management apparatus further comprises an electrical control box, wherein the electrical control box is located in the lower space; and
the electrical control box is disposed adjacent to each of two adjacent side surfaces of the cabinet.

10. The thermal management apparatus according to claim 9, wherein
the electrical control box is connected to one of the plurality of columns through a rotating assembly.

11. The thermal management apparatus according to claim 10, wherein
the rotating assembly comprises a hinge.

12. The thermal management apparatus according to any one of claims 4 to 11, wherein
at least one lifting eye is disposed on an outer surface of the upper frame; or
a plurality of castors are disposed on an outer surface of a bottom surface of the cabinet; or
at least one forklift support is disposed on the spacer plate.

13. The thermal management apparatus according to any one of claims 1 to 12, wherein
the fan is disposed on an outer surface of the top surface.

14. The thermal management apparatus according to any one of claims 1 to 13, wherein
the first heat dissipation module comprises a first refrigerant flow channel plate and a first coolant flow channel plate, and the first refrigerant flow channel plate is attached and fastened to the first coolant flow channel plate; and
the second heat dissipation module comprises a second refrigerant flow channel plate and a second coolant flow channel plate, and the second refrigerant flow channel plate is attached and fastened to the second coolant flow channel plate.

15. An energy storage system, wherein the energy storage system comprises an energy storage module and the thermal management apparatus according to any one of claims 1 to 13, and the thermal management apparatus is configured to dissipate heat for the energy storage module.

16. The energy storage system according to claim 15, wherein the thermal management apparatus is disposed on the top of the energy storage module, or the thermal management apparatus is attached to a side surface of the energy storage module.
